# EUROPÄISCHE PATENTSCHRIFT

(11) **EP 2 828 140 B1**
(45) Veröffentlichungstag und Bekanntmachung des Hinweises auf die Patenterteilung: **20.01.2016**
(21) Anmeldenummer: 13720223.0
(22) Anmeldetag: 11.03.2013
(51) Int. Cl.: B62D 1/16, D04C 3/40

(54) **LENKSÄULE MIT IM FLECHTVERFAHREN HERGESTELLTEN FASERVERBUNDELEMENTEN**
STEERING COLUMN WITH COMPOSITE FIBRE ELEMENTS PRODUCED IN A BRAIDING METHOD
COLONNE DE DIRECTION COMPORTANT DES ÉLÉMENTS COMPOSITES RENFORCÉS PAR FIBRES FABRIQUÉS SELON UN PROCÉDÉ DE TRESSAGE

(30) Priorität: 20.03.2012 DE 102012005434
(43) Veröffentlichungstag der Anmeldung: 28.01.2015
(73) Patentinhaber: ThyssenKrupp Presta AG, 9492 Eschen (LI)
(72) Erfinder: HEITZ, Thomas, FL-9493 Mauren (LI); REGNER, Sebastian, CH-9445 Rebstein (CH); SCHACHT, Arne, A-6800 Feldkirch (AT)
(74) Vertreter: ThyssenKrupp Intellectual Property GmbH
(86) Internationale Anmeldenummer: PCT/EP2013/000713
(87) Internationale Veröffentlichungsnummer: WO 2013/139447

(56) Entgegenhaltungen:
- EP-A2- 0 091 671
- DE-A1- 10 242 527

## Beschreibung

Die vorliegende Erfindung betrifft eine Lenksäule für ein Kraftfahrzeug mit den Merkmalen des Oberbegriffs des Anspruchs 1 sowie ein Verfahren zur Herstellung einer Lenksäule mit den Merkmalen des Oberbegriffs des Anspruchs 12.

Lenksäulen für Kraftfahrzeuge sind mehrteilige Baugruppen, bei denen eine Lenkspindel oder Lenkwelle in einer Lagereinheit gelagert ist. Die Lagereinheit selbst ist gegenüber einer Konsole häufig verschwenkbar gelagert, sodass eine Höheneinstellung des Lenkrades möglich ist. Zusätzlich ist oft auch eine Teleskopierbarkeit der Lenksäule zur Axialverstellung der Lenkradposition vorgesehen. Die Konsole selbst ist in der Karosserie des Kraftfahrzeuges befestigt. Die Höhenverstellung und die Axialverstellung der Lenksäule können elektromechanisch oder rein mechanisch erfolgen. Die Lenksäule ist zudem Träger zahlreicher Funktionselemente, die elektrische Komponenten wie Lenkstockhebel und Bedientasten am Lenkrad ebenso wie elektromechanische Komponenten wie das Zündschloss umfassen können. Lenksäulen sind bei modernen Kraftfahrzeugen deshalb komplexe Baugruppen.

Lenksäulen müssen nicht nur die mechanischen Funktionen sicherstellen, die für den Lenkvorgang erforderlich sind, sondern auch bei einem Crash durch genau definierte Verformung und Energieabsorption das Verletzungsrisiko des Fahrers gering halten. Diese Aufgaben stehen im Widerspruch zu einer Grundanforderung im Kraftfahrzeugbau, nach der die verwendeten Komponenten ein möglich geringes Gewicht aufweisen sollen, um das Gesamtgewicht des Fahrzeuges niedrig zu halten.

Zu diesem Zweck ist es bekannt, einzelne Komponenten von Fahrzeugen Kraftfahrzeuglenksäulen aus faserverstärktem Verbundmaterial herzustellen.

Das deutsche Patent DE 698 10 553 T2 zeigt eine verstellbare Lenksäule mit einer Arretierung, die ein Zahnsegment aus einem glasfaserverstärkten Kunststoff aufweist.

Aus der Druckschrift DE 10 2004 025 245 A1 ist ein Hybridquerträger eines Kraftfahrzeugs unter Verwendung von Faserverbundmaterial bekannt.

Die als gattungsbildend anzusehende Druckschrift WO 99/03716 zeigt einen Energieabsorber für Kraftfahrzeuge, der aus einem Faserwerkstoff gefertigt ist.

Die Patentschrift US 5 632 940 zeigt eine Fahrradtretkurbel aus Faserverbundwerkstoff.

Verfahren zur Herstellung von Kraftfahrzeugteilen aus Kohlenstofffasergeflecht sind ebenfalls bekannt, beispielsweise aus der deutschen Patentschrift DE 102 59 593 B4, in der ein Flechtverfahren beschrieben wird, das durch Umkehr der Arbeitsrichtung während des Flechtvorganges in spezifischen Bereichen eine Verstärkung des Kohlenstofffasergeflechts ermöglicht.

Aus der Druckschrift EP 0 091 671 A2 ist eine Lenksäule bekannt, mit einem starren Lenksäulenabschnitt und einem beim Zusammenstauchen der Lenksäule nachgiebigen, eine Gitterstruktur aufweisenden Rohrteil, wobei zumindest das Rohrteil zusammen mit dem Lenksäulenabschnitt einstückig aus faserverstärktem Kunststoff gebildet ist.

Die Offenlegungsschrift DE 102 42 527 A1 offenbart weiterhin eine Lenksäule für ein Kraftfahrzeug. wobei der Montageträger und das Lenksäulenstützgehäuse mindestens teilweise aus einem faserverstärktem Verbundwerkstoff gebildet sind.

Ausgehend von diesem Stand der Technik ist es Aufgabe der vorliegenden Erfindung, eine Lenksäule zu schaffen, bei der komplex gestaltete Bauelemente durch Faserverstärkung mit einem Verbundmaterial versteift werden, so dass ein an sich nicht ausreichend stabiles Formteil mittels Faserverbundmaterial bei insgesamt geringerem Gewicht die erforderlichen mechanischen Eigenschaften erhält. Es ist außerdem Aufgabe der vorliegenden Erfindung, ein Verfahren bereit zu stellen, mit dem Bauelemente einer Kraftfahrzeuglenksäule in der erforderlichen Form hergestellt werden können, wobei das Verfahren für eine Serienproduktion geeignet sein soll.

Weil bei einer Lenksäule für ein Kraftfahrzeug mit einer in einer Lenkspindellagereinheit drehbar gelagerten Lenkspindel und mit einer Führungsklammer zur Verbindung der Lenkspindellagereinheit mit einer Karosserie des Kraftfahrzeuges, wobei mindestens ein Bauteil der Lenksäule mindestens teilweise aus einem faserverstärkten Verbundwerkstoff gebildet ist, weiter vorgesehen ist, dass ein Bauteil einen der Form des späteren Bauteils entsprechenden Flechtkern aus einem dünnwandigen Kunststoff aufweist, welcher mit einem Fasermaterial umflochten ist, und weil der Flechtkern in einem Spritzgussverfahren hergestellt ist, kann der Flechtkern in dem fertigen Bauteil verbleiben.

Vorzugsweise ist das Bauteil ein Element der später fertigzustellenden Lenksäule, das die Lenkspindel mittelbar oder unmittelbar lagert.

Wenn weiter vorgesehen ist, dass der Flechtkern eingespritzte Funktionselemente enthält, sind diese Funktionselemente nach dem Umflechten bereits vorhanden und müssen nicht später angefügt werden. Funktionselemente können hierbei Befestigungslaschen, Führungen, Bewegungsbegrenzungen oder auch Halter für Kabelbäume und dergleichen sein. Es ist dabei auch denkbar und möglich, Funktionselemente für die elektrische Kontaktierung, aktive oder passive Schwingungsdämpfer in den Flechtkern zu integrieren. Vorzugsweise sind die Befestigungselemente Stanzbiegeteile, die in den Flechtkern eingelegt und im Spritzgussverfahren umspritzt worden sind. Es handelt sich vorzugsweise um Blechlaschen mit Öffnungen, Bohrungen oder Ausnehmungen.

Bei der erfindungsgemäßen Lenksäule kann die Führungsklammer direkt zur Befestigung an der Fahrzeugkarosserie ausgebildet sein oder indirekt, beispielweise über ein Drehgelenk und eine Halteklammer an der Karosserie befestigt werden, um eine Verstellmöglichkeit darzustellen.

Als Fasermaterial eignen sich besonders Fasern aus Kohlenstoff (=Kohlenstofffasern) oder Aramid. Weiter können aber auch Fasern aus Kunststoff, wie beispielsweise Polyester oder POM, sowie aus Glas, Metall, Keramik oder auch aus Naturfasern eingesetzt werden. Denkbar und möglich ist auch eine Mischung aus verschiedenen, insbesondere den oben aufgezählten, Fasern einzusetzen.

In einer bevorzugten Ausführungsform ist das Bauteil eine Führungsklammer für eine Lenkspindellagereinheit, die im Querschnitt einseitig offen gestaltet ist. Dieses Bauteil kann als im Querschnitt U-förmige Führungsklammer zunächst thermoplastisch gespritzt werden, wobei dieser Flechtkern dann eine geringe Eigenstabilität aufweist. Vor dem Umflechten kann der Flechtkern mit einem Hilfskern verbunden werden, um das Handling zu vereinfachen. Der Flechtkern, der vom Hilfskern in dieser bevorzugten Ausführung gehalten ist, wird umflochten und dadurch von außen mit Fasern verstärkt. Nach dem Aushärten des Faserverbundwerkstoffes kann der Hilfskern entfernt werden. Durch den Einsatz eines Hilfskerns ist es jedoch auch denkbar und möglich, den Hilfskern vor dem vollständigen Aushärten des Faserwerkstoffes zu entfernen. Dadurch können in einem Durchlaufbetrieb Taktzeiten eingespart werden. Der Faserwerkstoff wird dann zur Freistellung der oben offenen Seite der Führungsklammer dort durch Schneiden oder Fräsen entfernt.

Es kann auch vorgesehen sein, eine Lenkspindellagereinheit mit einem thermoplastisch hergestellten Flechtkern von geringer Eigenstabilität und einer Umflechtung mit einem Faserverbundwerkstoff herzustellen. Hierbei ist vorzugsweise der Flechtkern mit dem Faserverbundwerkstoff als fortlaufendes Teil in mehrfacher Länge des fertigen Bauelements gefertigt, welches dann nach dem Aushärten des Faserverbundwerkstoffes in Einzelstücke abgelängt werden kann.

Bei dem erfindungsgemäßen Verfahren sind folgende Schritte vorgesehen:
a) Die Herstellung eines einfachen Flechtkerns, der im Wesentlichen die Geometrie des darzustellenden Bauteils aufweist;
b) Befestigung des Flechtkerns auf einem Hilfskern;
c) Flechten der Fasern um den Flechtkern herum;
d) Aushärten eines Kunstharzes oder eines thermoplastischen Werkstoffes in der Faserstruktur, um eine Aushärtung des Verbundwerkstoffes und eine innige Verbindung mit dem Flechtkern zu erzielen;
e) bei Bauteilen, die an einer Längsseite offen oder teilweise offen gestaltet sein sollen, nach dem im Schritt d) erfolgtem Aushärten Öffnen dieser Seite durch Schneiden oder Fräsen.

Weiter kann vorgesehen sein, den Flechtkern nach dem Aushärten im Schritt d zu entfernen. Es kann vorzugsweise vorgesehen sein, mehrere ähnliche Bauelemente in einem Herstellungsvorgang zu fertigen, indem ein fortlaufendes Profil als Flechtkern im Schritt a eingesetzt wird und in einem weiteren Verfahrensschritt nach dem Aushärten das so hergestellte Werkstück in einzelne Teile aufgetrennt wird.

Bei Bauteilen, die an einer Längsseite offen oder teilweise offen gestaltet sein sollen, ist vorgesehen, nach dem Aushärten diese Seite durch Schneiden oder Fräsen zu öffnen. Diese Verfahrensvariante hat den Vorteil, dass der relativ einfache Fertigungsvorgang des allseitigen Umflechtens mit dem Faserwerkstoff auch an der später offenen Seite durchgeführt werden kann und dass nach dem Aushärten die gewünschte Struktur geschaffen werden kann, wobei die gewünschte Form und Festigkeit ähnlich wie bei vollumfänglich umflochtenen Bauelementen erzielt werden kann. Hierbei kann es vorgesehen sein, die Trennkanten der Fasern durch ein Harz oder einen Klebstoff abzudecken, um ein späteres Entflechten der Fasern weiter zu erschweren.

Für die Montage und Funktion in der Lenksäule des Kraftfahrzeuges ist es von Vorteil, wenn Funktionselemente, vorzugsweise in Form von Stanzbiegeteilen, in den Flechtkern eingearbeitet oder mit dem Flechtkern verbunden sind. Eine besonders einfache Ausführungsform sieht vor, dass Stanzbiegeteile in Form von Laschen oder Streifen in die Form eingelegt werden, die zum Herstellen des Flechtkerns vorgesehen ist, und dass diese Bauteile dann im Spritzgussverfahren umspritzt und so unverlierbar mit dem Flechtkern verbunden werden.

Vorzugsweise wird der Flechtvorgang so ausgeführt, dass die einzelnen Faserstränge bei dem Flechtvorgang um die Funktionselemente herum auf den Flechtkern aufgeflochten werden, sodass die Funktionselemente zwischen den einzelnen Fasersträngen des Fasermaterials über die spätere Oberfläche hervorstehen. Dabei kann vorgesehen sein, dass die Funktionselemente bereits im Flechtkern so angeordnet sind, das sie in dem späteren Flechtvorgang zwischen einzelnen Fasersträngen liegen. Faserstränge können bezüglich der Längsachse des Bauteils in Winkeln von etwa 20° bis 85° geführt werden. In entsprechenden Winkeln zur Längsachse des Bauteils können dann auch die Funktionselemente angeordnet sein. Zusätzlich können sogenannte Stehfäden vorgesehen sein, die unter einem sehr kleinen Winkel von etwa 0°, oder einem Winkel im Bereich von 0° bis 3°, zur Längsachse ausgerichtet sind und an der Oberfläche des Flechtkerns angeordnet sind und beim Flechten mit eingeflochten werden.

Nachfolgend wird ein Ausführungsbeispiel der vorliegenden Erfindung anhand der Zeichnung näher beschrieben. Es zeigen:
- Figur 1:: einen Flechtkern in der Geometrie einer Lenkspindellagereinheit mit seitlichen Funktionselementen;
- Figur 2:: einen rohrförmigen Flechtkern, der mehrere Lenkspindeleinheiten hintereinander umfasst;
- Figur 3:: den Flechtkern aus Figur 2 in einer schematischen Darstellung während des Umflechtens mit einem Fasermaterial;
- Figur 4:: den Flechtkern aus Figur 3 in nahezu vollständig umflochtenen Zustand;
- Figur 5:: den Flechtkern aus Figur 4 mit dem darauf angebrachten Faserwerkstoff nach abgeschlossenem Flechtvorgang, in eine zweiteilige, geöffnete Form eingelegt;
- Figur 6:: die Form aus Figur 5 in geschlossenem Zustand mit darin einliegenden Werkstück;
- Figur 7:: das aus der Form der Figur 6 nach Aushärten entnommene Werkstück mit schematisch angedeuteter Trennvorrichtung zur Vereinzelung der Lenkspindellagereinheiten;
- Figur 8:: einen Flechtkern für eine Führungsklammer zur Verbindung der Lenkspindellagereinheit mit der Karosserie eines Kraftfahrzeuges;
- Figur 9:: Flechtkern für die Führungsklammer aus Figur 8 in einer anderen perspektivischen Darstellung;
- Figur 10:: die Führungsklammer aus Figur 9 mit umgebenden Fasermaterial, wobei Funktionselemente über das geflochtene Fasermaterial herausstehen;
- Figur 11:: die Führungsklammer aus Figur 10 in schematischer Darstellung nach abgeschlossenem Aushärten des Faserverbundmaterials;
- Figur 12:: die Führungsklammer aus Figur 11 mit teilweise aufgeschnittenem Faserverbundmaterial auf der sichtbaren Oberseite der Halteklammer; sowie
- Figur 13:: die Führungsklammer aus Figur 12 mit vollständig entfernten Faserverbundmaterial im Bereich der offenen Oberseite; sowie
- Figur 14:: die Führungsklammer aus Figur 10 in schematischer Darstellung eines Vorbereitungsschritts zur Auftrennung des Faserverbundmaterials;
- Figur 15:: eine Ausführungsform für eine erfindungsgemäße Lenksäule;
- Figur 16:: eine andere Ansicht der Lenksäule aus Figur 15.

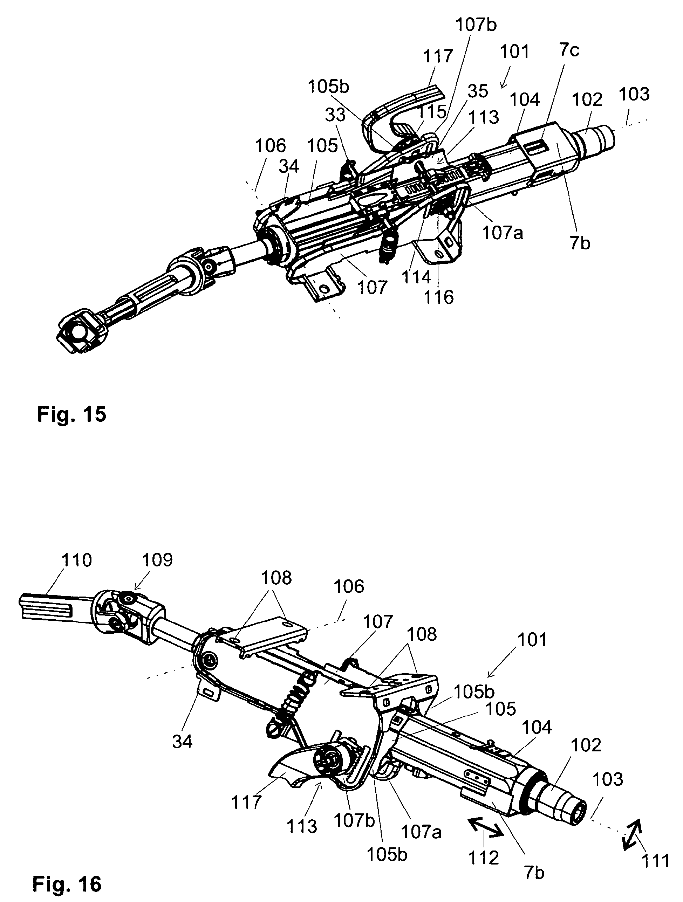

Die Figuren 15 und 16 veranschaulichen eine erfindungsgemäße Lenksäule 101, die eine Lenkspindel 102 umfasst, die um ihre Drehachse 103 drehbar in einer Manteleinheit 104 (nachfolgend auch Lenkspindellagereinheit 104 genannt) gelagert ist. Die Manteleinheit 104 ist in einer Führungsklammer 105 entlang der Längsachse 103 der Lenkspindel verschiebbar geführt. Die Führungsklammer 105 ist um eine Schwenkachse 106 in einem Halteteil 107 schwenkbar gelagert. Das Halteteil 107 kann in Befestigungspunkten 108 an der nicht dargestellten Karosserie befestigt werden. Die von einem Fahrer über ein (nicht dargestelltes) Lenkrad in die Lenkspindel 102 eingebrachte Drehbewegung wird über ein Kardangelenk 109 und weitere Lenkwellenteile 110 in das nicht dargestellte Lenkgetriebe eingebracht. Zur Erhöhung des Komforts des Fahrers kann die Lenksäule in ihrer Höhe in die Verstellrichtung 111 und in ihrer Länge in die Verstellrichtung 112 verstellt werden. Hierzu ist ein Fixiermechanismus 113 vorgesehen, der einen im Stand der Technik bekannten Spannapparat umfasst. Der Spannapparat weist einen Spannbolzen 114 auf, eine Nockenmechanismus 115, ein Drucklager 116 und einen Spannhebel 117. Durch Verdrehung des Spannhebels 117 werden die beiden Nocken des Nockenmechanismus 115 gegeneinander verdreht und die Seitenwangen 107a, 107b zusammengezogen, wodurch eine reibschlüssige Verspannung der Seitenwangen 107a, 107b des Halteteils 107 mit den Seitenflächen der Führungsklammer 105 und wiederum mit Seitenflächen der Manteleinheit 104 erfolgt.

Der Spannbolzen 114 durchsetzt Langlöcher in den Seitenwangen 107a, 107b des Halteteils 107 und Löcher in den Seitenflächen 105a, 105b der Führungsklammer 105. Der Nockenmechanismus 115 ist auf dem einen Ende des Spannbolzens 114 angeordnet und das Drucklager 116 auf dem anderen Ende des Spannbolzens angeordnet. Die Seitenwangen 107a, 107b, sowie die Seitenflächen 105a, 105b, als auch die Manteleinheit 104 sind zwischen dem Nockenmechanismus 115 und dem Drucklager 116 angeordnet.

Durch Drehen des Stellhebels 117 kann das Fixiersystem 113 wahlweise in eine geöffnete Stellung oder eine geschlossene Stellung umgeschaltet werden. In der geöffneten Stellung kann die Lenkspindel 102, beziehungsweise das daran befestigte Lenkrad (nicht dargestellt in den Figuren) in ihrer Position verstellt werden, insbesondere in der Längsrichtung 112 und der Höhen- oder Neigungsrichtung 111 verschoben werden. In der geschlossenen Stellung des Fixiersystems 113 ist die Lenksäule in ihrer Position fixiert. Derartige Lenksäulen sind im Stand der Technik bekannt.

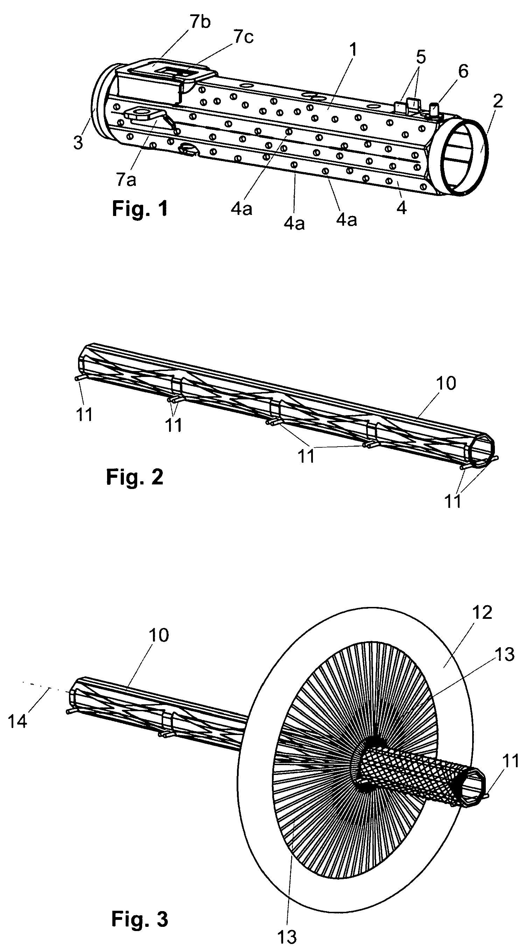

Am Beispiel einer Lenkspindellagereinheit 104 wird in den Figuren 1 bis 7 die Darstellung der Lenkspindellagereinheit mit Fasermaterial, das um einen Flechtkern umflochten ist, veranschaulicht, wobei die Figuren teilweise stark schematisiert dargestellt sind.

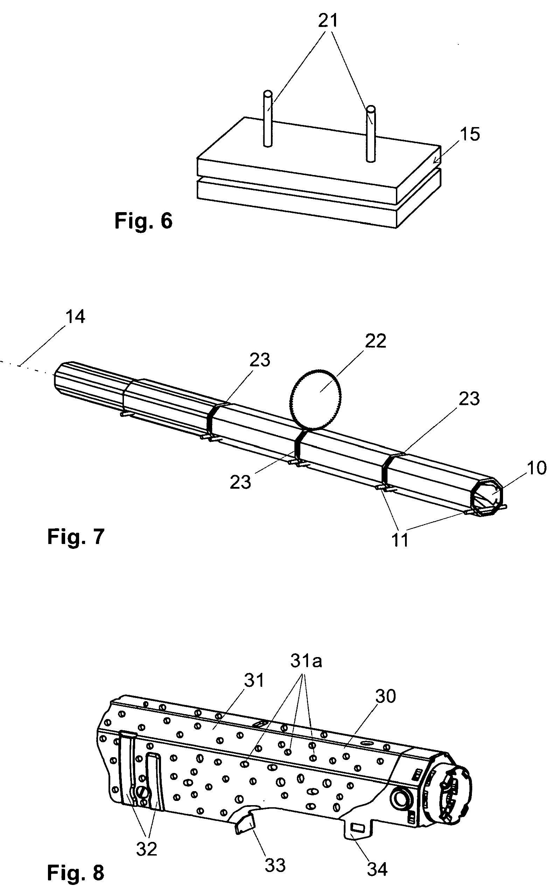

Am Beispiel einer Führungsklammer 105 wird in den Figuren 8 bis 14 die Darstellung der Führungsklammer mit Fasermaterial, das um einen Flechtkern umflochten ist, veranschaulicht, wobei die Figuren teilweise stark schematisiert dargestellt sind.

In der Figur 1 ist ein Flechtkern 1 für eine Lenkspindellagereinheit 104 dargestellt. Der Flechtkern 1 weist einen vorderen Lagersitz 2 und einen hinteren Lagersitz 3 auf, zwischen denen sich eine im Wesentlichen achteckige, rohrförmige Wandung 4 erstreckt. Über die Wandung 4 nach außen stehen Funktionselemente hinaus, die Führungen 5, einen Anschlag 6 und Halter 7a und Ansatzstück 7b mit Aussparung 7c für eine später zu befestigende (nicht dargestellte) Wegfahrsperre.

Der Flechtkern 1 wurde in einem Spritzgussverfahren gefertigt. Dazu wurden die Funktionselemente als Blechteile (Stanzbiegeteile) vorgefertigt und in eine Spritzgussform eingelegt. Der Formhohlraum der Spritzgussform entspricht dem in Figur 1 dargestellten Flechtkern 1. Nach dem Spritzgießen und Entformen entsteht das in Figur 1 dargestellte Bauelement, das auf Grund einer geringen Wandstärke und auf Grund des leichten, wenig steifen Spritzgießmaterials in dieser Form noch nicht als Lenkspindellagereinheit einsetzbar ist. In die Form sind, soweit es kostengünstig bei ausreichender Festigkeit möglich ist, Aussparungen 4a eingebracht, um Material und Gewicht einzusparen. Dies wird dadurch möglich, dass die geforderten Steifigkeiten durch die Umflechtung erzielt wird und nicht vom Flechtkern bereitgestellt werden muss. Die Aussparungen können als Durchgangslöcher oder als Sacklöcher ausgebildet sein. Sacklöcher haben den Vorteil, das der Innenraum gegenüber dem äußeren Umfang leichter abzudichten ist, was für nachfolgende Verfahrensschritte von Vorteil ist.

Die Figur 2 zeigt schematisch einen Flechtkern 10, der insgesamt vier hintereinander angeordnete Einheiten umfasst. Die Einheiten sind im Wesentlichen identisch aufgebaut. Jede der vier Einheiten entspricht im Wesentlichen dem Flechtkern 1 aus Figur 1. Der Flechtkern 10 weist nach außen abstehende Funktionselemente auf, die nur schematisch als Zapfen 11 dargestellt sind. Sie werden in ähnlicher Weise gestaltet, eingelegt und gefertigt wie die Funktionselemente 5, 6 und 7a, 7b, 7c aus Figur 1.

In der Figur 3 ist ein Verfahrensschritt dargestellt, bei dem der Flechtkern 10 durch sogenanntes "overbraiding" mit einem Fasermaterial in einer Vielzahl von Fasersträngen umflochten wird. Eine Flechtmaschine 12 gibt eine Anzahl von Fasersträngen 13 ab, die nach einem bekannten Verfahren um den Flechtkern 10 herum gelegt werden. Dieses Verfahren ist beispielsweise Grundlage des als Stand der Technik genannten Dokuments DE 102 59 593 B4. Der Flechtvorgang erfolgt in Richtung einer Längsachse 14 des Flechtkerns 10 von der dem Betrachter zugewandten Stirnseite des Flechtkerns 10 her. Die Faserbündel 13 werden dabei auf die äußere Oberfläche des Flechtkerns 11 aufgelegt und werden um die Funktionselemente 11 herum gelegt, so dass die Funktionselemente 11 durch die äußere umhüllende Oberfläche der geflochtenen Fasern nach außen hervorstehen.

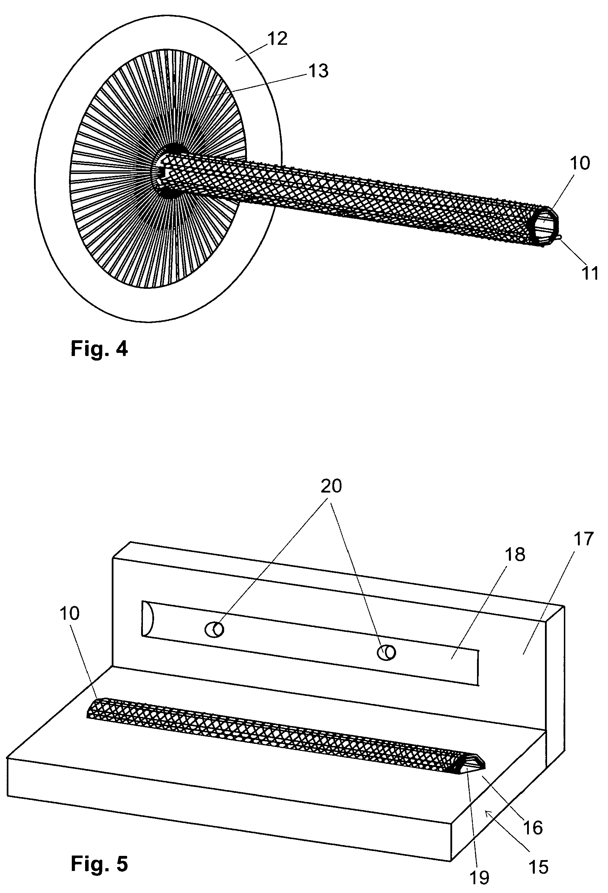

Die Figur 4 zeigt einen weiteren Verfahrensschritt, in dem der Flechtkern 10 vollständig mit Fasermaterial umflochten worden ist. Das entstandene Geflecht liegt an der Außenseite des Flechtkerns 10 auf. Die Flechtmaschine 12 ist an dem dem Betrachter abgewandten Ende des Flechtkerns 10 angekommen. Dort werden die Faserbündel 13 abgetrennt. Der Flechtkern 10 mit dem aufliegenden Geflecht liegt nun als Zwischenprodukt des Herstellungsverfahrens vor. In der Praxis steht die Flechtmaschine, während das Werkstück in Richtung der Längsachse transportiert wird.

Die Figur 5 zeigt, wie der Flechtkern 10 in dem Zustand, in dem er aus dem in Figur 4 dargestellten Verfahrensschritt hervorgeht, in eine Form 15 eingelegt ist. Die Form 15 ist zweiteilig mit einer Unterseite 16 und einer Oberseite 17. Die Oberseite 17 weist einen etwa halbzylindrischen Formhohlraum 18 auf. Die Formunterseite 16 weist einen entsprechenden etwa halbzylindrischen Formhohlraum 19 auf. Der Flechtkern 10 mit dem umgebenden Geflecht ist in den Formhohlraum 19 eingelegt. Es ist weiter erkennbar, dass die Formoberseite 17 im Beispiel zwei Füllöffnungen 20 aufweist, durch die der Formhohlraum von außen zugänglich ist und ein Zuströmen von Harz und Abströmen von Luft ermöglichen.

Die Figur 6 zeigt die Form 15 mit einliegendem Flechtkern in geschlossenem Zustand. Der Formhohlraum umgibt den Flechtkern vollständig. Durch Rohrleitungen 21 kann ein Kunstharzmaterial in den Formhohlraum eingeleitet werden. Das Kunstharzmaterial kann dann in dem Formhohlraum an der Außenseite des Flechtkerns in das Geflecht eindringen. Dabei sind mit Vorteil Mittel vorgesehen, die ein Eindringen von Kunstharz in den Innenraum des Flechtkerns verhindern. Anschließend wird das Kunstharz ausgehärtet. Dies kann chemisch oder thermisch erfolgen. In letzterem Fall ist die Form 15 vorzugsweise heizbar. Alternativ kann die Aushärtung auch mittels Ultraschallerwärmung oder mit UV-Bestrahlung erfolgen. Hierfür müssen in der Form 15 entsprechende Mittel vorgesehen sein, beispielsweise Ultraschallsonotroden oder UV-Lampen mit entsprechend UV-durchlässigen Form-Bereichen, damit das UV-Licht das Werkstück erreichen kann. Auch eine Kombination aus mehreren dieser genannten Aushärteverfahren ist denkbar und möglich.

In der Figur 7 ist der Flechtkern 10 mit Funktionselementen 11 in dem Zustand veranschaulicht, wie er nach dem Aushärten des Kunststoffmaterials und nach dem Lösen aus der Form 15 vorliegt. Der Flechtkern 10 weist, wie oben beschrieben, mehrere baugleiche Einheiten auf, die sich in Richtung der Längsachse aneinander reihen. Mit einer Trennvorrichtung 22 wird der Flechtkern 10 nun quer zu seiner Längsachse 14 an vorgesehenen Stellen 23 aufgetrennt, um einzelne Bauteile zu erhalten, die letztlich dem Bauteil aus Figur 1 entsprechen. Gegenüber dem Bauteil aus Figur 1, das lediglich den Flechtkern darstellt, ist durch das Umflechten und Aushärten des Kunstharzes an der äußeren Oberfläche jedoch ein Bauteil aus einem Verbundwerkstoff entstanden, das bei geringem Gewicht eine Festigkeit aufweist, die die Verwendung des Bauteils in einem Kraftfahrzeug als Lenkspindellagereinheit ermöglicht. Die Funktionselemente 5, 6 dienen zur Befestigung von Crashelementen und die Funktionselemente 7a, 7b und 7c dienen zur Befestigung Bauelementen für eine Wegfahrsperre. Auch Einrichtungen für die Halterung elektrischer Kabel können vorgesehen sein. Die Funktionselemente 11 dienen mit Vorteil zur Unterstützung des Trennvorgangs, als Positionierhilfe und/oder Haltemittel.

Die Figur 8 zeigt einen Flechtkern 30 für eine Führungsklammer , die zur Verbindung einer Lenkspindellagereinheit (beispielsweise gemäß Figur 1) mit der Karosserie eines Kraftfahrzeugs geeignet sein soll. Entsprechend dem gezeigten Ausführungsbeispiel erfolgt die Verbindung mit der Karosserie über ein Drehgelenk in der Schwenkachse 106 und über eine Halteklammer 107. Es ist aber auch denkbar und möglich, die Führungsklammer mit entsprechenden Befestigungsmitteln direkt an einer Karosserie eines Kraftfahrzeuges zu befestigen. Der Flechtkern 30 ist auch bei diesem Ausführungsbeispiel als Spritzgussteil gefertigt, wobei eine Wandung 31 aus einem dünnwandigen thermoplastischen Kunststoff gefertigt ist und Funktionselemente trägt, die z. B. Führungsschienen 32, Anschläge 33 und Kabelhalter 34 umfassen.

Zur Fertigung wurden die Funktionselemente 32, 33 und 34 in Form von Stanzbiegeteilen in den Formhohlraum einer entsprechenden Spritzgussform eingelegt. Durch Einspritzen des thermoplastischen Kunststoffs wurde dann die Wandung 31 gefertigt, die stoffschlüssig fest mit den Funktionselementen verbunden ist und die so den Flechtkern 30 bildet. Der Flechtkern 30 ist aufgrund der Dünnwandigkeit und der Materialeigenschaften des thermoplastischen Kunststoffs in der vorliegenden Form nicht zur Verwendung in einer Lenksäule eines Kraftfahrzeugs als Bauteil geeignet. Auch hier können Aussparungen 31a vorgesehen sein, um Material und Gewicht einzusparen.

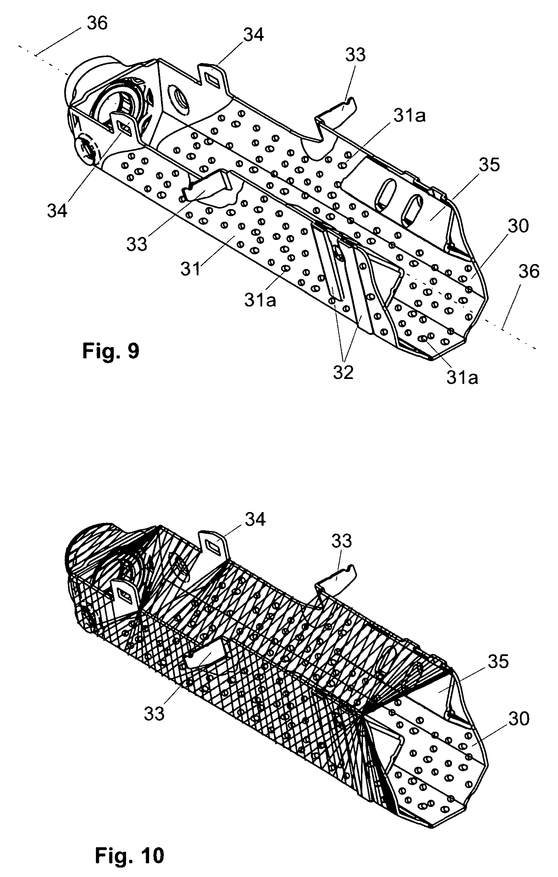

Die Figur 9 zeigt den Flechtkern 30 aus Figur 8 in einer anderen perspektivischen Darstellung. Gleiche Bauelemente tragen gleiche Bezugsziffern.

Der Flechtkern 30 weist in einem Querschnitt etwa im Bereich der Anschläge 33 eine U-förmige Querschnittsgestalt auf, die von einer Unterseite und zwei Seitenwänden begrenzt ist und die in der Darstellung der Figur 9 oben offen ist. Die Führungsschienen 32 sind noch mit Klemmbacken 35 verbunden oder in der Nähe der Klemmbacken 35 angeordnet. Die Klemmbacken 35 verengen den inneren Querschnitt des Flechtkern 30 an einem Ende. Sie ergänzen die Querschnittsgestalt des Flechtkerns 30 in diesem Bereich zu einem oben offenen Achteck. In dieses Achteck ist eine Lenkspindellagereinheit, beispielsweise nach Figur 1, einführbar. Die Lenkspindellagereinheit ist dann in Längsrichtung, also in Richtung einer Längsachse 36 des Flechtkerns 30 teleskopierbar, wodurch eine Axialverstellung eines nicht dargestellten Lenkrades erzielt wird. Dieser Aufbau ist grundsätzlich bekannt. Die Klemmbacken 35 dienen mit einem quer zu der Längsachse 35 angeordneten Klemmelement zur klemmenden Verriegelung der Lenkspindellagereinheit in der Führungsklammer 105.

Die Klemmbacken 35 können ebenfalls Funktionselemente sein, die bei der Herstellung des Flechtkerns bereits in die Spritzgussform eingelegt werden können und die dann durch den Spritzgießvorgang mit dem Kunststoffmaterial verbunden werden.

Zur weiteren Bearbeitung des Flechtkerns 30 ist ein Umflechten mit einem Fasergeflecht, vorzugsweise mit Kohlenstofffasern, vorgesehen, wie es zu der Lenkspindellagereinheit in den Figuren 3 und 4 angedeutet ist.

Die Figur 10 zeigt den Flechtkern 30 nach dem Aufbringen des Fasergeflechts. Es ist erkennbar, dass die Funktionselemente (Anschläge / Federabstützung 33, Kabelhalter 34) über die äußere Oberfläche des Geflechts hinaus stehen. Bei dem Flechtvorgang wurden die Faserbündel so geführt, dass sie um die hervorstehenden Teile der Funktionselemente herum gelegt werden, um vollständig auf der Oberfläche des thermoplastischen Werkstoffs des Flechtkerns 30 aufzuliegen. Die Funktionselemente stehen frei zugänglich hervor. Die Faserbündel, mit denen das Geflecht erzeugt wird, sind durchgehend um den Flechtkern 30 herum gelegt. Sie umschließen deshalb auch die in Figur 9 sichtbare offene Oberseite und bilden so ein im wesentlichen rohrförmiges Geflecht, dass den Flechtkern 30 als Mantelfläche umspannt.

Auch für die Darstellung einer Führungsklammer kann das geflochtene Rohteil in eine Form eingelegt werden und mit Kunstharz getränkt und anschließen ausgehärtet und entformt werden, analog zur oben bereits für die Lenkspindellagereinheit beschriebenen Vorgehensweise. Zur Verhinderung des Eindringens von Harz in den Hohlraum kann entweder der Flechtkern geschlossen sein, was hier nicht dargestellt ist, oder ein zusätzliches Werkzeugelement vorgesehen sein, dass den auszubildenden Hohlraum ausfüllt oder abschirmt und so ein Eindringen von Kunstharz verhindert.

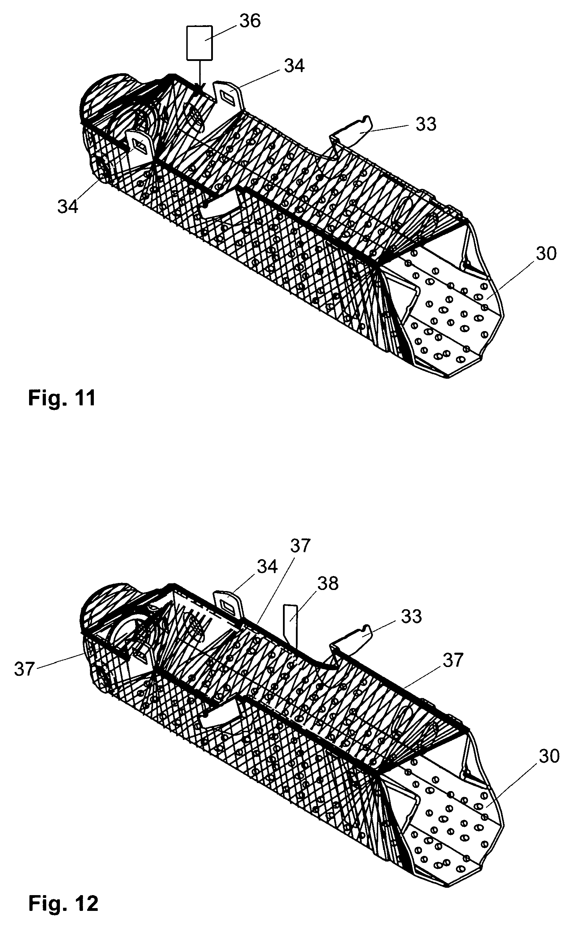

Die Figur 11 veranschaulicht schematisch, dass aus einem Reservoir 36 ein Kunstharzmaterial an einem Randabschnitt in das Geflecht eingespritzt wird. Der Randabschnitt ist dabei der Bereich, der nach dem nachfolgend vorgesehenen Beschnitt des Bauteils den Rand 37 bildet. Durch das Umspritzen mit Kunstharzmaterial soll ein Entflechten des fertigen Bauteils an diesem Rand 37 verhindert werden. Nach dem Aushärten des Harzes, das die Fasern umgibt, und des Harzes am Randabschnitt ergibt sich eine Rohrstruktur, die eine äußere Umhüllung des Flechtkerns 30 darstellt. Diese Rohrstruktur ist in der Oberseite zwischen beispielsweise den Kabelhaltern 34 geschlossen. Dies ist bei der im Beispiel dargestellten Führungsklammer für eine Lenksäule eines Kraftfahrzeugs nicht gewünscht.

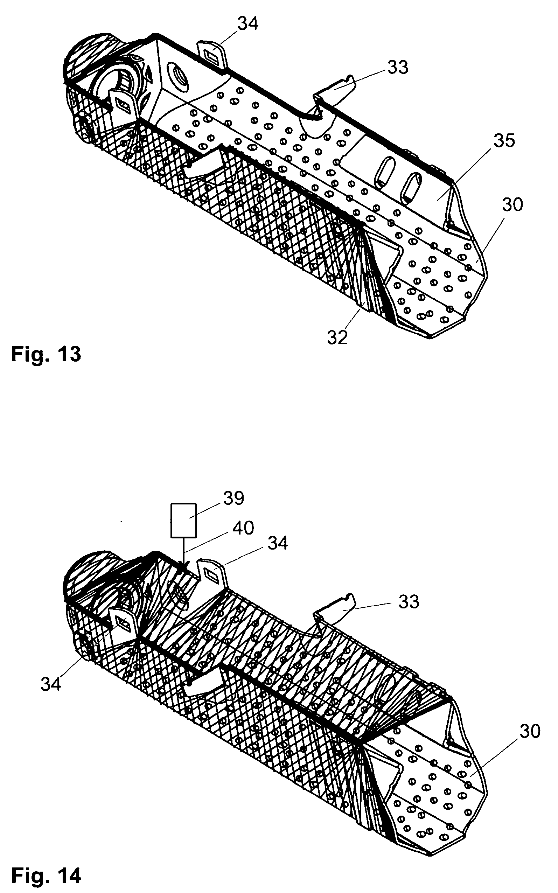

In der Figur 12 ist deshalb angedeutet, dass entlang eines Randes 37 mit einem Trennwerkzeug 38 der Faserverbundwerkstoff an der Oberseite des Flechtkerns 30 aufgeschnitten oder aufgetrennt wird, um die in Figur 9 sichtbare Oberseite des Flechtkerns 30 zu öffnen. Der Faserverbundwerkstoff wird zu diesem Zweck entfernt. Als Trennwerkzeug 38 ist dabei ein Trennmesser oder auch ein Laserstrahl geeignet. In der Figur 13 ist schließlich das Endprodukt des Fertigungsvorgangs dargestellt. Die beschriebenen Verfahrensschritte ergeben einen Flechtkern 30 mit Funktionselementen und einer den Flechtkern außen umgebenden Lage aus einem Faserverbundwerkstoff, der den Flechtkern 30 umgibt, der mit dem Flechtkern 30 stoffschlüssig innig verbunden ist und der den Flechtkern 30 so weit stabilisiert, dass sich ein Bauteil mit der geeigneten Festigkeit ergibt. Das Verfahren und die verwendeten Werkstoffe führen zu dem Ergebnis, dass das so hergestellte Bauteil wie im Falle der Lenkspindellagereinheit besonders leicht ist.

Durch eine geeignete Darstellung des Flechtkerns kann auch die Führungsklammer, wie sie in den Beispielen veranschaulicht ist, in Form von hintereinander angeordneten Einheiten dargestellt werden. Die Auftrennung erfolgt nach dem Aushärten des Harzes, mit dem die miteinander verflochtenen Fasern zuvor getränkt sind.

Auch andere Bauteile einer Kraftfahrzeuglenksäule können mit dem beschriebenen Verfahren hergestellt werden. Wesentlich ist hierfür, dass zunächst ein leichter, aber mechanisch noch nicht als Bauteil geeigneter Flechtkern im Spritzgussverfahren mit eingelegten Funktionselementen gefertigt, dass dieser Flechtkern mit einem Fasergeflecht aus vorzugsweise Kohlenstofffaser umflochten wird und dass der Flechtkern dann stabilisiert wird, indem ein Kunststoffmaterial in dem Geflecht aushärtet. Das Kunststoffmaterial kann dabei wie in dem beschriebenen Ausführungsbeispielen, nach dem Umflechten eingebracht werden. Es können auch ummantelte Kohlenstofffasern verwendet werden , die zum Aushärten lediglich erhitzt und wieder abgekühlt werden müssen. Insbesondere in derartigen Fällen kann alternativ zur Abdeckung Randabschnitts, wie er in Zusammenhang mit Figur 11 beschrieben ist, auch eine Vernetzung der Fasern im Randabschnitt herbeigeführt werden. Ein derartiger Verfahrensschritt ist in Figur 14 veranschaulicht. Der fertig umflochtene Flechtkern 30 wird dann entlang eines Randabschnitts mit einem Laserstrahl 40 von einem Laser 39 bestrahlt und damit entsprechend erwärmt. Dadurch erfolgt eine Vernetzung des Randabschnitts. Nach dem Auftrennen der Fasern, wie dies völlig analog der Figur 12 entnommen werden kann, ist der Rand 37 des Bauteils durch die Vernetzung gegen ein Entflechten gesichert.

## Patentansprüche

1. Lenksäule (101) für ein Kraftfahrzeug mit einer in einer Lenkspindellagereinheit (104) drehbar gelagerten Lenkspindel (102) und mit einer Führungsklammer (105) zur Verbindung der Lenkspindellagereinheit (104) mit einer Karosserie des Kraftfahrzeuges, wobei mindestens ein Bauteil der Lenksäulen (101) mindestens teilweise aus einem faserverstärkten Verbundwerkstoff gebildet ist, wobei das Bauteil im Kraftfluss der Lenksäule (101) zwischen der Lenkspindel (102) und der Karosserie liegt, **dadurch gekennzeichnet, dass** das Bauteil einen der Form des Bauteils entsprechenden dünnwandigen Flechtkern (1, 10, 30) aus einem thermoplastischen Kunststoff aufweist, welcher mit einem Fasermaterial umflochten ist, wobei der Flechtkern (1, 10 , 30) in einem Spritzgussverfahren hergestellt ist.

2. Lenksäule (101) nach Anspruch 1, **dadurch gekennzeichnet, dass** das Bauteil die Lenkspindel (102) mittelbar oder unmittelbar lagert.

3. Lenksäule (101) nach einem der vorhergehenden Ansprüche, **dadurch gekennzeichnet, dass** der Flechtkern (1, 10, 30) eingeformte Funktionselemente (5, 6, 7a, 7b, 7c, 11, 32, 33, 34) enthält.

4. Lenksäule (101) nach Anspruch 3, **dadurch gekennzeichnet, dass** die Funktionselemente (5, 6, 7a, 7b, 7c, 11, 32, 33, 34) ausgewählt sind aus der Gruppe, die Befestigungslaschen (7a, 7b, 7c), Führungen (5, 32), Bewegungsbegrenzungen (6, 33) und Halter (34) für Kabelbäume umfasst.

5. Lenksäule (101) nach einem der vorhergehenden Ansprüche 3 oder 4, **dadurch gekennzeichnet, dass** die Funktionselemente (5, 6, 7a, 7b, 7c, 11, 32, 33, 34) Blechlaschen mit Öffnungen, Bohrungen oder Ausnehmungen sind.

6. Lenksäule (101) nach einem der vorhergehenden Ansprüche, **dadurch gekennzeichnet, dass** das Bauteil eine Führungsklammer (105) für eine Lenkspindellagereinheit (104) ist.

7. Lenksäule (101) nach Anspruch 6, **dadurch gekennzeichnet, dass** die Führungsklammer (105) in einem Querschnitt in einem mittigen Bereich an einer im Betrieb oben liegenden Seite offen ist.

8. Lenksäule (101) nach Anspruch 7, **dadurch gekennzeichnet, dass** das Fasermaterial zur Freistellung der oben offenen Seite der Führungsklammer (105) durch Schneiden oder Fräsen entfernt ist.

9. Lenksäule (101) nach einem der vorhergehenden Ansprüche 1 bis 5, **dadurch gekennzeichnet, dass** das Bauteil eine Lenkspindellagereinheit (104) mit einem thermoplastisch oder duroplastisch hergestellten Flechtkern (1, 10, 30) von geringer Eigenstabilität und einer Umflechtung mit einem auf Fasermaterial basierenden Faserverbundwerkstoff ist.

10. Lenksäule (101) nach Anspruch 9, **dadurch gekennzeichnet, dass** der Flechtkern (1, 10, 30) mit dem Faserverbundwerkstoff als fortlaufendes Teil in mehrfacher Länge des fertigen Bauelements gefertigt, welches dann nach dem Aushärten des Faserverbundwerkstoffes in Einzelstücke abgelängt werden kann.

11. Lenksäule (101) nach einem der vorhergehenden Ansprüche, **dadurch gekennzeichnet, dass** die Funktionselemente (5, 6, 7a, 7b, 7c, 11, 32, 33, 34) derart aus der Oberfläche des Flechtkerns (1, 10, 30) nach außen heraus ragen, dass eine Flachseite des Funktionselements (5, 6, 7a, 7b, 7c, 11, 32, 33, 34) in einem Winkel zwischen 20° und 85° gegenüber der Längsachse (14) des Bauteils ausgerichtet ist.

12. Verfahren zur Herstellung einer Lenksäule (101) für ein Kraftfahrzeug mit folgenden Schritten:
a) Herstellung eines einfachen Flechtkerns (1, 10, 30) aus einem thermoplastischen oder einem duroplastischen Kunststoff im Spritzgussverfahren, wobei der Flechtkern (1, 10, 30) im Wesentlichen die Geometrie eines herzustellenden Bauteils der Lenksäule (101) aufweist;
b) Befestigung des Flechtkerns (1, 10, 30) auf einem Hilfskern;
c) Flechten von zur Herstellung eines Faserverbundmaterials geeigneten Fasern um den Flechtkern (1, 10, 30) herum;
d) Erzeugung einer innigen stoffschlüssige Verbindung mit dem Flechtkern (1, 10, 30)
durch Aushärten eines Kunstharzes oder eines thermoplastischen Werkstoffes im Bereich der Fasern,
**gekennzeichnet durch** den Schritt
e) bei Bauteilen, die an einer Längsseite offen oder teilweise offen gestaltet sein sollen, nach dem im Schritt d) erfolgten Aushärten Öffnen dieser Seite **durch** Schneiden oder Fräsen.

13. Verfahren nach Anspruch 12, **dadurch gekennzeichnet, dass** weiter folgender Schritt vorgesehen ist:
Entfernen des Hilfskerns nach dem im Schritt d) erfolgten Aushärten.

14. Verfahren nach Anspruch 12 oder 13, **dadurch gekennzeichnet, dass** weiter folgender Schritt vorgesehen ist:
Herstellen mehrerer ähnlicher Bauelemente in einem Herstellungsvorgang, indem im Schritt a) ein fortlaufendes Profil oder eine Anzahl von hintereinander aufgereihten Einzelkernen als Flechtkern (1, 10, 30) eingesetzt wird und in einem weiteren Verfahrensschritt nach dem im Schritt d) erfolgten Aushärten ein so hergestelltes Werkstück in einzelne Bauteile aufgetrennt wird.

15. Verfahren nach einem der vorhergehenden Ansprüche 12 bis 14, **dadurch gekennzeichnet, dass** weiter folgender Schritt vorgesehen ist:
Einbinden von Funktionselementen, (5, 6, 7a, 7b, 7c, 11, 32, 33, 34) die im Schritt a) in den Flechtkern (1, 10, 30) eingearbeitet oder mit dem Flechtkern (1, 10, 30) verbunden sind.

16. Verfahren nach Anspruch 15, **dadurch gekennzeichnet, dass** Funktionselemente (5, 6, 7a, 7b, 7c, 11, 32, 33, 34) in Form von Stanzbiegeteilen im Schritt a) in Form von Laschen oder Streifen in eine Form eingelegt werden, die zum Herstellen des Flechtkerns (1, 10, 30) vorgesehen ist, und dass die Stanzbiegeteile dann im Spritzgussverfahren umspritzt und mit dem Flechtkern (1, 10, 30) verbunden werden.

17. Verfahren nach einem der vorhergehenden Ansprüche 15 bis 16, **dadurch gekennzeichnet, dass** weiter folgender Schritt vorgesehen ist:
Ausführen des Flechtvorgangs in der Weise, dass einzelne Faserstränge (13) bei dem Flechtvorgang um die Funktionselemente (5, 6, 7a, 7b, 7c, 11, 32, 33, 34) herum auf den Flechtkern (1, 10, 30) gelegt werden, sodass die Funktionselemente (5, 6, 7a, 7b, 7c, 11, 32, 33, 34) zwischen den einzelnen Fasersträngen (13) des Fasermaterials über deren äußere Oberfläche hervorstehen.

18. Verfahren nach Anspruch 17, **dadurch gekennzeichnet, dass** die Funktionselemente (5, 6, 7a, 7b, 7c, 11, 32, 33, 34) nach dem Schritt a) im Flechtkern (1, 10, 30) so angeordnet sind, dass sie in dem späteren Flechtvorgang zwischen einzelnen Fasersträngen (13) und parallel zu den Fasersträngen (13) liegen.

19. Verfahren nach einem der vorhergehenden Ansprüche 12 bis 18, **dadurch gekennzeichnet, dass** weiter vorgesehen ist, die Faserstränge (13) bei dem Flechtvorgang bezüglich der Längsachse (14) des Bauteils in Winkeln von 20° bis 85° auszurichten.

20. Verfahren nach Anspruch 19, **dadurch gekennzeichnet, dass** der Winkel der Faserstränge (13) zur Längsachse (14) des Bauteils im Schritt c) nicht konstant ist, sondern innerhalb eines Bereichs mit den Grenzen von 20° und 85° variiert wird.

21. Verfahren nach Anspruch 20, **dadurch gekennzeichnet, dass** die Funktionselemente (5, 6, 7a, 7b, 7c, 11, 32, 33, 34) in dem Bereich, in dem sie das Faserverbundmaterial durchsetzen, in Winkeln zwischen 20° und 85° zur Längsachse (14) des Bauteils angeordnet sind.

## Claims

1. Steering column (101) for a motor vehicle, with a steering spindle (102) mounted rotatably in a steering spindle bearing unit (104) and with a guide bracket (105) for connecting the steering spindle bearing unit (104) to a body of the motor vehicle, at least one component of the steering column (101) being formed at least partially from a fiber-reinforced composite material, the component lying in the force flux of the steering column (101) between the steering spindle (102) and the body, **characterized in that** the component has a thin-walled braided core (1, 10, 30) which corresponds to the form of the component and is made from a thermoplastic and which is braided around with a fiber material, the braided core (1, 10, 30) being produced in an injection molding method.

2. Steering column (101) according to Claim 1, **characterized in that** the component supports the steering spindle (102) indirectly or directly.

3. Steering column (101) according to one of the preceding claims, **characterized in that** the braided core (1, 10, 30) contains incorporated functional elements (5, 6, 7a, 7b, 7c, 11, 32, 33, 34).

4. Steering column (101) according to Claim 3, **characterized in that** the functional elements (5, 6, 7a, 7b, 7c, 11, 32, 33, 34) are selected from the group which comprises fastening tabs (7a, 7b, 7c), guides (5, 32), movement limitations (6, 33) and holders (34) for cable harnesses.

5. Steering column (101) according to either one of the preceding Claims 3 and 4, **characterized in that** the functional elements (5, 6, 7a, 7b, 7c, 11, 32, 33, 34) are sheet metal tabs with orifices, bores or recesses.

6. Steering column (101) according to one of the preceding claims, **characterized in that** the component is a guide bracket (105) for a steering spindle bearing unit (104).

7. Steering column (101) according to Claim 6, **characterized in that** the guide bracket (105) is in cross section open in a middle region on the side lying on top during operation.

8. Steering column (101) according to Claim 7, **characterized in that** to expose the upwardly open side of the guide bracket (105), the fiber material is removed by cutting or milling.

9. Steering column (101) according to one of the preceding Claims 1 to 5, **characterized in that** the component is a steering spindle bearing unit (104) with a thermoplastically or thermosettably produced braided core (1, 10, 30) of low inherent stability and with braiding around with a composite fiber material based on fiber material.

10. Steering column (101) according to Claim 9, **characterized in that** the braided core (1, 10, 30) having the composite fiber material is manufactured as a continuous part which has a length several times that of the finished structural element and which can then be cut into individual pieces after the curing of the composite fiber material.

11. Steering column (101) according to one of the preceding claims, **characterized in that** the functional elements (5, 6, 7a, 7b, 7c, 11, 32, 33, 34) project outward from the surface of the braided core (1, 10, 30) in such a way that a flat side of the functional element (5, 6, 7a, 7b, 7c, 11, 32, 33, 34) is oriented at an angle of between 20° and 85° with respect to the longitudinal axis (14) of the component.

12. Method for producing a steering column (101) for a motor vehicle, with the following steps:
a) production of a simple braided core (1, 10, 30) from a thermoplastic or thermosettable plastic in an injection molding method, the braided core (1, 10, 30) having essentially the geometry of a component, to be produced, of the steering column (101) ;
b) fastening of the braided core (1, 10, 30) to an auxiliary core;
c) braiding of fibers suitable for producing a composite fiber material around the braided core (1, 10, 30);
d) generation of an internal materially integral connection to the braided core (1, 10, 30) by curing of a synthetic resin or of a thermoplastic material in the region of the fibers,
**characterized by** the step
e) in the case of components which are to be configured to be open or partially open on one longitudinal side, after curing has taken place in step d), opening of this side by cutting or milling.

13. Method according to Claim 12, **characterized in that**, further, the following step is provided:
removal of the auxiliary core after curing has taken place in step d).

14. Method according to Claim 12 or 13, **characterized in that**, further, the following step is provided:
production of a plurality of similar structural elements in one production operation, **in that**, in step a), a continuous profile or a number of individual cores lined up one behind the other is used as the braided core (1, 10, 30), and, in a further method step, after curing has taken place in step d), a workpiece thus produced is separated into individual components.

15. Method according to one of the preceding Claims 12 to 14, **characterized in that**, further, the following step is provided:
integration of functional elements (5, 6, 7a, 7b, 7c, 11, 32, 33, 34) which in step a) are incorporated into the braided core (1, 10, 30) or are connected to the braided core (1, 10, 30).

16. Method according to Claim 15, **characterized in that** functional elements (5, 6, 7a, 7b, 7c, 11, 32, 33, 34) in the form of stamped and bent parts are introduced in step a) in the form of tabs or strips into a mold which is provided for producing the braided core (1, 10, 30), and **in that** the stamped and bent parts are then injected around in an injection molding method and are connected to the braided core (1, 10, 30).

17. Method according to one of the preceding Claims 15 to 16, **characterized in that**, further, the following step is provided:
execution of the braiding operation in such a way that, during the braiding operation, individual fiber strands (13) are laid around the functional elements (5, 6, 7a, 7b, 7c, 11, 32, 33, 34) onto the braided core (1, 10, 30) so that the functional elements (5, 6, 7a, 7b, 7c, 11, 32, 33, 34) project, between the individual fiber strands (13) of the fiber material, above the outer surface of these.

18. Method according to Claim 17, **characterized in that** the functional elements (5, 6, 7a, 7b, 7c, 11, 32, 33, 34) are arranged in the braided core (1, 10, 30) after step a), such that, in the subsequent braiding operation, they lie between the individual fiber strands (13) and parallel to the fiber strands (13).

19. Method according to one of the preceding Claims 12 to 18, **characterized in that**, further, there is provision for orienting the fiber strands (13) at angles of 20° to 85° with respect to the longitudinal axis (14) of the component during the braiding operation.

20. Method according to Claim 19, **characterized in that** the angle of the fiber strands (13) to the longitudinal axis (14) of the component in step c) is not constant, but instead varies within a range having the limits of 20° and 85°.

21. Method according to Claim 20, **characterized in that** the functional elements (5, 6, 7a, 7b, 7c, 11, 32, 33, 34), in the region in which they pass through the composite fiber material, are arranged at angles of between 20° and 85° to the longitudinal axis (14) of the component.

## Revendications

1. Colonne de direction (101) pour un véhicule à moteur avec un arbre de direction (102) supporté de façon rotative dans une unité de palier d'arbre de direction (104) et avec une attache de guidage (105) pour la liaison de l'unité de palier d'arbre de direction (104) à une carrosserie du véhicule à moteur, dans laquelle au moins un composant de la colonne de direction (101) est formé au moins en partie par un matériau composite renforcé par des fibres, dans laquelle le composant est situé dans le flux de force de la colonne de direction (101) entre l'arbre de direction (102) et la carrosserie, **caractérisée en ce que** le composant présente un noyau tressé à paroi mince (1, 10, 30) correspondant à la forme du composant, qui est entouré avec un matériau fibreux tressé, le noyau tressé (1, 10, 30) étant fabriqué par un procédé de coulée par injection.

2. Colonne de direction (101) selon la revendication 1, **caractérisée en ce que** le composant supporte directement ou indirectement l'arbre de direction (102).

3. Colonne de direction (101) selon l'une quelconque des revendications précédentes, **caractérisée en ce que** le noyau tressé (1, 10, 30) contient des éléments fonctionnels moulés (5, 6, 7a, 7b, 7c, 11, 32, 33, 34).

4. Colonne de direction (101) selon la revendication 3, **caractérisée en ce que** les éléments fonctionnels (5, 6, 7a, 7b, 7c, 11, 32, 33, 34) sont choisis dans le groupe qui comprend des pattes de fixation (7a, 7b, 7c), des guides (5, 32), des limiteurs de mouvement (6, 33) et des supports (34) pour des faisceaux de câbles.

5. Colonne de direction (101) selon l'une quelconque des revendications précédentes 3 ou 4, **caractérisée en ce que** les éléments fonctionnels (5, 6, 7a, 7b, 7c, 11, 32, 33, 34) sont des pattes de tôle avec des ouvertures, des perçages ou des évidements.

6. Colonne de direction (101) selon l'une quelconque des revendications précédentes, **caractérisée en ce que** le composant est une attache de guidage (105) pour une unité de palier d'arbre de direction (104).

7. Colonne de direction (101) selon la revendication 6, **caractérisée en ce que** l'attache de guidage (105) est ouverte en section transversale dans une région centrale sur un côté situé vers le haut en cours d'utilisation.

8. Colonne de direction (101) selon la revendication 7, **caractérisée en ce que** le matériau fibreux est enlevé par découpage ou fraisage pour le dégagement du côté ouvert de l'attache de guidage (105).

9. Colonne de direction (101) selon l'une quelconque des revendications précédentes 1 à 5, **caractérisée en ce que** le composant est une unité de palier d'arbre de direction (104) avec un noyau tressé fabriqué sous forme thermoplastique ou thermodurcissable (1, 10, 30) de faible stabilité propre et avec une enveloppe tressée avec un matériau composite à base de matériau fibreux.

10. Colonne de direction (101) selon la revendication 9, **caractérisée en ce que** le noyau tressé (1, 10, 30) est fabriqué avec le matériau composite fibreux sous forme de pièce continue avec une longueur multiple de celle du composant terminé, qui peut ensuite être coupée à longueur en pièces individuelles après le durcissement du matériau composite fibreux.

11. Colonne de direction (101) selon l'une quelconque des revendications précédentes, **caractérisée en ce que** les éléments fonctionnels (5, 6, 7a, 7b, 7c, 11, 32, 33, 34) sortent de la surface du noyau tressé (1, 10, 30) vers l'extérieur de telle manière qu'un côté plat de l'élément fonctionnel (5, 6, 7a, 7b, 7c, 11, 32, 33, 34) soit orienté sous un angle compris entre 20° et 85° par rapport à l'axe longitudinal (14) du composant.

12. Procédé de fabrication d'une colonne de direction (101) pour un véhicule à moteur, comprenant les étapes suivantes:
a) fabrication d'un noyau tressé simple (1, 10, 30) en une matière plastique thermoplastique ou thermodurcissable par un procédé de coulée par injection, dans lequel le noyau tressé (1, 10, 30) présente essentiellement la géométrie d'un composant à fabriquer de la colonne de direction (101);
b) fixation du noyau tressé (1, 10, 30) sur un noyau auxiliaire;
c) tressage de fibres adaptées pour la fabrication d'un matériau composite fibreux autour du noyau tressé (1, 10, 30);
d) production d'une liaison matérielle intime avec le noyau tressé (1, 10, 30) par durcissement d'une résine synthétique ou d'un matériau thermoplastique dans la région des fibres,
**caractérisé par** l'étape de
e) dans les composants, qui doivent être ouverts ou partiellement ouverts sur un long côté, ouverture de ce côté par découpage ou fraisage après le durcissement effectué à l'étape d).

13. Procédé selon la revendication 12, **caractérisé en ce qu'**il est en outre prévu l'étape suivante:
- enlèvement du noyau auxiliaire après le durcissement effectué à l'étape d).

14. Procédé selon la revendication 12 ou 13, **caractérisé en ce qu'**il est en outre prévu l'étape suivante:
- fabrication de plusieurs composants similaires en un processus de fabrication, du fait qu'à l'étape a) on utilise comme noyau tressé (1, 10, 30) un profilé continu ou un nombre de noyaux individuels alignés l'un derrière l'autre et que, dans une autre étape du procédé après le durcissement effectué à l'étape d), on sépare une pièce ainsi fabriquée en composants individuels.

15. Procédé selon l'une quelconque des revendications 12 à 14, **caractérisé en ce qu'**il est en outre prévu l'étape suivante:
- liaison d'éléments fonctionnels (5, 6, 7a, 7b, 7c, 11, 32, 33, 34) qui, à l'étape a), sont intégrés dans le noyau tressé (1, 10, 30) ou assemblés au noyau tressé (1, 10, 30).

16. Procédé selon la revendication 15, **caractérisé en ce que** l'on dépose des éléments fonctionnels (5, 6, 7a, 7b, 7c, 11, 32, 33, 34) sous forme de pièces coudées par estampage à l'étape a) en forme de pattes ou de bandes, dans un moule qui est prévu pour la fabrication du noyau tressé (1, 10, 30), et **en ce que** l'on enrobe ensuite les pièces coudées par estampage par un procédé de coulée par injection et on les assemble au noyau tressé (1, 10, 30).

17. Procédé selon l'une des revendications précédentes 15 à 16, **caractérisé en ce qu'**il est en outre prévu l'étape suivante:
- exécution de l'opération de tressage, de telle manière que des cordons de fibres individuels (13) soient posés lors de l'opération de tressage autour des éléments fonctionnels (5, 6, 7a, 7b, 7c, 11, 32, 33, 34) sur le noyau tressé (1, 10, 30), de telle manière que les éléments fonctionnels (5, 6, 7a, 7b, 7c, 11, 32, 33, 34) soient saillants entre les cordons de fibres individuels (13) du matériau fibreux au-dessus de la surface de ces derniers.

18. Procédé selon la revendication 17, **caractérisé en ce que** les éléments fonctionnels (5, 6, 7a, 7b, 7c, 11, 32, 33, 34) sont disposés dans le noyau tressé (1, 10, 30) après l'étape a), de telle manière qu'ils soient situés, lors de l'opération de tressage ultérieure, entre des cordons de fibres individuels (13) et parallèlement aux cordons de fibres (13).

19. Procédé selon l'une quelconque des revendications précédentes 12 à 18, **caractérisé en ce qu'**il est en outre prévu d'orienter les cordons de fibres (13) lors de l'opération de tressage sous des angles de 20° à 85° par rapport à l'axe longitudinal (14) du composant.

20. Procédé selon la revendication 19, **caractérisé en ce que** l'angle des cordons de fibres (13) par rapport à l'axe longitudinal (14) du composant n'est pas constant à l'étape c), mais qu'il varie à l'intérieur d'une plage ayant les limites de 20° et 85°.

21. Procédé selon la revendication 20, **caractérisé en ce que** les éléments fonctionnels (5, 6, 7a, 7b, 7c, 11, 32, 33, 34) sont disposés dans la région dans laquelle ils traversent le matériau composite renforcé par des fibres, suivant des angles compris entre 20° et 85° par rapport à l'axe longitudinal (14) du composant.
